# EUROPEAN PATENT APPLICATION

(11) **EP 2 175 510 A1**
(43) Date of publication of application: **14.04.2010**
(21) Application number: 08776814.9
(22) Date of filing: 10.07.2008
(51) Int. Cl.: H01M 8/04, H01M 8/10

(54) **FUEL CELL**

(30) Priority: 23.07.2007 JP 2007190450
(71) Applicant: Kabushiki Kaisha Toshiba, Minato-ku Tokyo 105-8001 (JP)
(72) Inventor: TAKAHASHI, Kenichi, Tokyo 105-8001 (JP); KAWAMURA, Koichi, Tokyo 105-8001 (JP)
(74) Representative: Henkel, Feiler & Hänzel
(86) International application number: PCT/JP2008/001855
(87) International publication number: WO 2009/013863

(57) **Abstract**

The invention provides a fuel cell which can suppress an abnormal temperature rise by blocking a flow path from a fuel storing section to a fuel battery cell when the fuel cell has the abnormal temperature rise. The invention relates to a fuel cell (1), comprising a fuel supply section (4) connected to a fuel electrode (13) through a flow path (5) and a fuel shut-off section (6) disposed in the flow path (5) to shut off the supply of a fuel to the fuel electrode (13) when an abnormal temperature rise occurs, wherein the fuel shut-off section (6) has a valve case (61) having an inlet opening (611b) for injecting the fuel from the fuel supply section (4) and an output opening (611c) for discharging the fuel to the fuel electrode (13), a valve rod (622) disposed within the valve case (61), and a valve rod moving means (63) formed of a spring made of a shape memory alloy or a bimetal to move the valve rod (622) to shut off a flow path interconnecting the inlet opening (611b) and the output opening (611c) when the abnormal temperature rise occurs.

## Description

### Technical Field

The present invention relates to a fuel cell using a liquid fuel.

### Background Art

In recent years, attempts have been made to use a fuel cell as a power source for portable electronic equipment such as a notebook computer, a cellular phone and the like to make it possible to use them for a long time without recharging. The fuel cell has characteristics that it can generate electricity by merely supplying a fuel and air and generate electricity continuously for a long time by replenishing the fuel. Therefore, if the fuel cell can be made compact, it is a very advantageous system as a power source for the portable electronic equipment.

A direct methanol fuel ceU (DMFC) is promising as a power sour ce for portable electronic appliances because it can be made compact and its fuel can be handled with ease. As a method of supplying the liquid fuel of the DMFC, there are known an active method such as a gas supply type, a liquid supply type or the like and a passive method such as an inside vaporization type or the like which supplies the liquid fuel from a fuel storing section to a fuel electrode by vaporizing in the cell.

The passive method such as the inside vaporization type is particularly advantageous for miniaturization of the DMFC. For the the passive DMFC, there is proposed, for example, a structure that a membrane electrode assembly (fuel battery cell) having a fuel electrode, an electrolyte membrane and an air electrode is disposed on a fuel supply section which is formed of a box-like container made of resin (see, for example, Patent References 1 and 2).

According to the inside vaporization type DMFC, the vaporized component of the liquid fuel stored within a fuel permeating layer is diffused in a fuel vaporization layer (anode gas diffusion layer), the diffused vaporized fuel is supplied to an anode catalyst layer, to perform a power generation reaction with the air from a cathode catalyst layer on the electrolyte membrane.

For the liquid supply type DMFC, there is known a technology of connecting the cell and the fuel storing section through a flow path (see, for example, Patent References 3 to 5). The supply amount of the liquid fuel can be adjusted based on the shape, diameter and the like of the flow path when the liquid fuel is supplied to the cell through the flow path.
Patent Reference 1: JP-B2 3413111 (KOKAI)
Patent Referee 2: WO 2005/112172 A1
Patent Reference 3: JP-A 2005-518646 (KOHYO)
Patent Reference 4: JP-A 2006-085952 (KOKAI)
Patent Reference 5: US 2006/0029851 A1

### Disclosure of the Invention

The present invention provides a fuel cell which can suppress an abnormal temperature rise of the fuel cell by blocking a flow path from a fuel storing section to a fuel battery cell.

Specifically, if the temperature of the fuel storing section rises excessively for a certain reason such as leaving a portable electronic appliance having the fuel cell in a car on a summer day, the fuel battery cell is supplied with an excessive amount of fuel due to an inner pressure increase with an increase in the fuel vapor pressure, and the excessive amount of fuel accelerates the power generation reaction to cause a possibility of an abnormal temperature rise to increase the temperature more and more. When the abnormal temperature rise occurs, a crossover phenomenon takes place increasingly such that the fuel is not decomposed into protons on the anode side but reaches the cathode side and is undergone catalytic oxidation, and the abnormal temperature rise is caused readily. The present invention provides a fuel cell which can suppress the abnormal temperature rise by blocking the flow path from the fuel storing section to the fuel battery cell when the fuel cell has the abnormal temperature rise.

According to an aspect of the present invention, there is provided a fuel cell, comprising a membrane electrode assembly having a fuel electrode, an air electrode and an electrolyte membrane held between the fuel electrode and the air electrode, a fuel supply section connected to the fuel electrode through a flow path, and a fuel shut-off section disposed in the flow path to shut off the supply of the fuel to the fuel electrode when an abnormal temperature rise occurs, wherein the fuel shut-off section has a valve case which has an inlet opening for injecting the fuel from the fuel supply section and an output opening for discharging the fuel to the fuel electrode, a valve rod which is disposed within the valve case, and a valve rod moving means which is formed of a spring made of a shape memory alloy or a bimetal to move the valve rod to shut off a flow path which connects the inlet opening and the output opening when the abnormal temperature rise occurs.

### Brief Description of Drawings

[FIG. 1] FIG. 1 is a sectional view showing an example of a fuel cell of the invention.
[FIG. 2] FIG. 2 is a sectional view showing an example (open state) of a fuel shut-off section.
[FIG. 3] FIG. 3 is a sectional view showing a shut-off state of the fuel shut-off section shown in FIG. 2. [FIG. 4] FIG. 4 is a sectional view showing a modified example (open state) of the fuel shut-off section shown in FIG. 2.
[FIG. 5] FIG. 5 is a sectional view showing a shut-off state of the fuel shut-off section shown in FIG. 4. [FIG. 6] FIG. 6 is a sectional view showing another example (open state) of the fuel shut-off section.
[FIG. 7] FIG. 7 is a sectional view showing a shut-off state of the fuel shut-off section shown in FIG. 6.

### Explanation of Numerals

1... fuel cell, 2... fuel battery cell, 3... fuel distribution mechanism, 4 ... fuel storing section, 5... flow path, 6... fuel shut-off section, 11... anode catalyst layer, 12... anode gas diffusion layer, 13... anode (fuel electrode), 14... cathode catalyst layer, 15... cathode gas diffusion layer, 16... cathode (air electrode/oxidant electrode), 17... electrolyte membrane, 20... porous body, 31... inlet opening, 32... output opening, 33... fuel distribution plate, 34... narrow conduit, 61... valve case, 61a... flow path-separating movable chamber, 61b... valve head chamber, 61c... shaft hole, 61d... front-end holder, 61e... rear-end holder, 61f... inlet opening, 61g... output opening, 611a... shaft hole, 611b... inlet opening, 611c... output opening, 612a... valve head chamber, 62... actuator, 621... main body section, 622... movable rod, 622a... large diameter section, 622b... small diameter section, 63... shape memory alloy spring (valve rod moving means), 64... bias spring, 65... movable film, 65a... sac-like portion, 65b... ring-shape peripheral portion, 65c... lip portion, 65d... bellows portion, 65m... center portion. 66... valve rod, 66a... valve head, 67... ring-shape elastic body, CTR... controller

### Best Mode for Carrying out the Invention

The fuel cell according to the invention is described below. The fuel cell of the invention has a membrane electrode assembly which has a fuel electrode, an air electrode and an electrolyte membrane held between the fuel electrode and the air electrode, a fuel supply section which is connected to the fuel electrode through a flow path, and a fuel shut-off section which is disposed in the flow path and shuts off the supply of the liquid fuel to the fuel electrode when an abnormal temperature rise occurs.

The fuel shut-off section according to the invention has a valve case which has an inlet opening for injecting the fuel from the fuel supply section and an output opening for discharging the fuel to the fuel electrode, a valve rod which is disposed within the valve case, and a valve rod moving means which is formed of a spring made of a shape memory alloy or a bimetal and moves the valve rod so as to block the flow path, which connects the inlet opening and the output opening, when the abnormal temperature rise occurs.

In the fuel shut-off section according to the invention, the spring made of the shape memory alloy or the bimetal is used as the valve rod moving means which moves the valve rod into a shut-off state, and when the fuel cell has the abnormal temperature rise, its heat is used to shut off the flow path so to enable to move the valve rod automatically. Thus, the fuel supply is shut off to enable to suppress the further progress of the abnormal temperature rise.

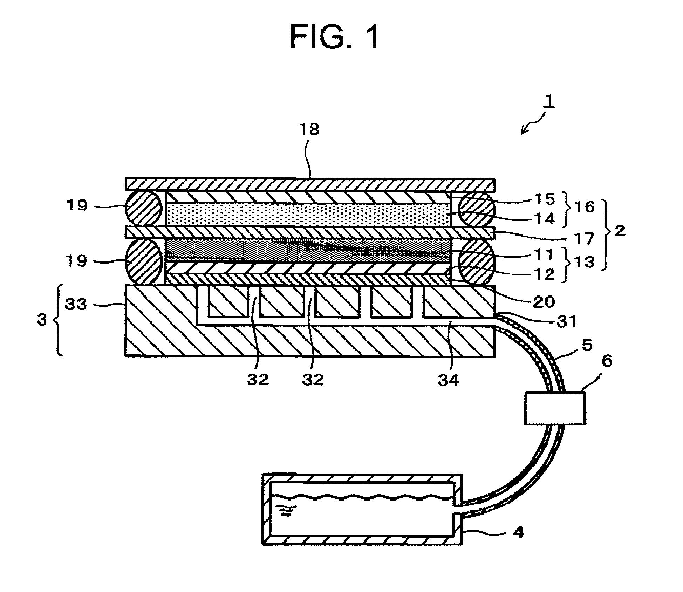

FIG. 1 shows an example of the entire structure of a fuel cell 1 according to the invention. The fuel cell 1 has a fuel battery cell 2 which configures an electromotive portion, a fuel distribution mechanism 3 which supplies a fuel to the fuel battery cell 2, a fuel storing section 4 which stores the liquid fuel and serves as a fuel supply section, a flow path 5 which connects the fuel distribution mechanism 3 and the fuel storing section 4, and a fuel shut-off section 6 which is disposed within the flow path 5.

The fuel battery cell 2 has a membrane electrode assembly (MEA) which is composed of an anode (fuel electrode) 13 having an anode catalyst layer 11 and an anode gas diffusion layer 12, a cathode (air electrode/oxidant electrode) 16 having a cathode catalyst layer 14 and a cathode gas diffusion layer 15, and a proton (hydrogen ion) conductive electrolyte membrane 17 held between the anode catalyst layer 11 and the cathode catalyst layer 14.

As a catalyst contained in the anode catalyst layer 11 and the cathode catalyst layer 14, there are a single body of platinum group elements such as Pt, Ru, Rh, Ir, Os and Pd, an alloy containing platinum group elements, and the like. For the anode catalyst layer 11, it is preferable to use Pt-Ru, Pt-Mo or the like having high resistance against methanol and carbon monoxide. For the cathode catalyst layer 14, it is referable to use Pt, Pt-Ni or the like.

But, the catalyst is not limited to them, and various types of materials having catalytic activity can be used. The catalyst may be either a supported catalyst using a conductive carrier such as a carbon material or an unsupported catalyst.

Examples of the proton conductive material configuring the electrolyte membrane 17 include a fluorine-based resin such as a perfluorosulfonic acid polymer having a sulfonic group (Nafion (trade name, a product of DuPont), Flemion (trade name, a product of Asahi Glass Co., Ltd.) etc.), an organic material such as a hydrocarbon-based resin having the sulfonic group, and an inorganic material such as tungstic acid or phosphotungstic acid. But, the proton conductive electrolyte membrane 17 is not limited to the above.

The anode gas diffusion layer 12, which is stacked on the anode catalyst layer 11, serves to supply uniformly the fuel to the anode catalyst layer 11 and also serves as a power collector for the anode catalyst layer 11. The cathode gas diffusion layer 15, which is stacked on the cathode catalyst layer 14, serves to supply uniformly an oxidant to the cathode catalyst layer 14 and also serves as a power collector for the cathode catalyst layer 14. The anode gas diffusion layer 12 and the cathode gas diffusion layer 15 are made of a porous substrate.

The anode gas diffusion layer 12 and the cathode gas diffusion layer 15 are stacked with a conductive layer, if necessary. As the conductive layer, a mesh, a porous film, a thin film or the like made of an electrically conductive metal material such as Au is used. A rubber O-ring 19 is interposed between the electrolyte membrane 17 and the fuel distribution mechanism 3 and a cover plate 18 to suppress a fuel leak or an oxidant leak from the fuel battery cell 2.

The cover plate 18 has an opening (not shown) for intaking air as an oxidant. A moisture retaining layer (not shown) and a surface layer (not shown) are disposed between the cover plate 18 and the cathode 16, if necessary.

The moisture retaining layer suppresses water evaporation by partially impregnating water generated by the cathode catalyst layer 14 and also promotes uniform diffusion of air to the cathode catalyst layer 14. The surface layer adjusts an air intake amount and has plural air introduction ports of which quantity, size and the like are adjusted depending on the air intake amount.

The fuel storing section 4 stores the liquid fuel suitably for the fuel battery cell 2. The liquid fuel includes methanol fuel such as aqueous methanol solution having various concentrations, pure methanol and the like. The liquid fuel is not necessarily limited to the methanol fuel. For example, the liquid fuel may be an ethanol fuel such as an aqueous ethanol solution or pure ethanol, a propanol fuel such as an aqueous propanol solution or pure propanol, a glycol fuel such as an aqueous glycol solution or pure glycol, dimethyl ether, formic acid, or the like. At any event, the fuel storing section 4 stores a liquid fuel suitable for the fuel battery cell 2.

The fuel distribution mechanism 3 is arranged on the side of the anode 13 of the fuel battery cell 2. The fuel distribution mechanism 3 is connected to the fuel storing section 4 through the flow path 5.
The fuel is introduced into the fuel distribution mechanism 3 from the fuel storing section 4 through the flow path 5.

The flow path 5 is not limited to a pipe independent of the fuel distribution mechanism 3 and the fuel storing section 4. For example, it may be a fuel flow path which connects the fuel distribution mechanism 3 and the fuel storing section 4 when they arc stacked into one body. It is adequate if the fuel distribution mechanism 3 is connected to the fuel storing section 4 through the flow path 5. In this fuel cell 1, the fuel supplied from the fuel storing section 4 to the fuel battery cell 2 is used for a power generation reaction but not returned to the fuel storing section. Thus, since the fuel is not circulated, this fuel supplying method is different from the conventional active method and called as a semi-passive type, and it docs not impair the miniaturization and the like of the device. The semi-passive type fuel cell may have a pump on the flow path 5 when it is configured to supply the fuel from the fuel storing section 4 to the fuel battery cell 2.

The fuel distribution mechanism 3 is provided with a fuel distribution plate 33 having at least one inlet opening 31, into which the fuel flows through the flow path 5, and plural output openings 32 which discharge the fuel and its vaporized component to the fuel battery cell 2.

The fuel distribution plate 33 has therein a narrow conduit 34 which forms a passage for the liquid fuel introduced through the inlet opening 31. The narrow conduit 34 is preferably a through hole having, for example, an inside diameter of 0.05 mm to 5 mm. The plural output openings 32 each are directly connected to the narrow conduit 34 serving as the fuel passage.

The liquid fuel introduced from the inlet opening 31 into the fuel distribution mechanism 3 is entered into the narrow conduit 34 serving as the fuel passage and introduced into the plural output openings 32- The plural output openings 32 may be provided with, for example, a vapor-liquid separator (not shown) which allows passage of only the vaporized component of the fuel but not the liquid component. Thus, the vaporized component of the fuel is supplied to the anode 13 of the fuel battery cell 2. The vapor-liquid separator may be disposed as a vapor-liquid separation film or the like between the fuel distribution mechanism 3 and the anode 13. The vaporized component of the liquid fuel is discharged from the plural output openings 32 toward the plural portions of the anode 13.

The fuel discharged from the fuel distribution mechanism 3 is supplied to the anode 13 of the fuel battery cell 2 as described above. In the fuel battery cell 2, the fuel is diffused through the anode gas diffusion layer 12 and supplied to the anode catalyst layer 11. When methanol fuel is used as the fuel, an internal reforming reaction of methanol represented by the following formula (1) occurs in the anode catalyst layer 11. When pure methanol is used as the methanol fuel, the water produced by the cathode catalyst layer 14 and the water in the electrolyte membrane 17 are reacted with the methanol to cause the internal reforming reaction represented by the formula (1). Otherwise, the internal reforming reaction is caused by another reaction mechanism not requiring water.

CH₃OH + H₂O → CO₂ + 6H⁺ + 6e^{*} (1)

Electrons (e) generated by the above reaction are guided to outside via the power collector to serve as so-called electricity to operate portable electronic appliances or the like, and then guided to the cathode 16. Protons (H⁺) generated by the internal reforming reaction represented by the formula (1) are also guided to the cathode 16 through the electrolyte membrane 17. Air is supplied as an oxidant to the cathode 16. The electrons (e⁻) and the protons (H⁺) having reached the cathode 16 react with oxygen contained in the air in the cathode catalyst layer 14 according to the following formula (2), and water is generated by the reaction.

6e⁻ + 6H⁺ + (3/2)O₂ → 3H₂O (2)

In addition, it is effective to insert a porous body 20 between the fuel distribution mechanism 3 and the anode 13. Various resins are usable as a component material for the porous body 20, and a resin film in a porous state or the like is used as the porous body 20.

The porous body 20 can be arranged to further homogenize the fuel supply amount to the anode 13. In other words, the fuel spouted from the output openings 32 of the fuel distribution mechanism 3 is once absorbed by the porous body 20 and diffused in a in-plane direction within the porous body 20. Since the fuel is then supplied from the porous body 20 to the anode 13, the fuel supply amount can be further homogenized.

The fuel cell 1 according to the invention is provided with the fuel shut-off section 6 in order to block the supply of the fuel from the fuel storing section 4 to the fuel distribution mechanism 3 and the like when the abnormal temperature rise occurs, thereby suppressing a further abnormal temperature rise. The fuel shut-off section 6 is disposed in the flow path 5 which is between the fuel storing section 4 and the fuel distribution mechanism 3.

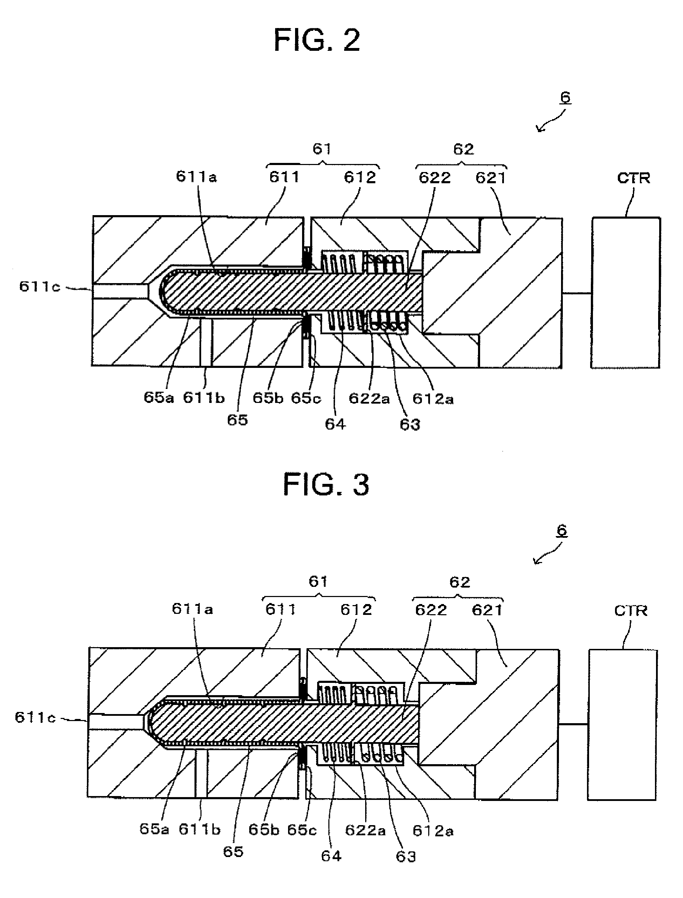

FIGs. 2 and 3 show an example of the fuel shut-off section 6. FIG. 2 shows a state that the fuel shut-off section 6 is in an open state, indicating a normal power generation state. FIG. 3 shows a state that the fuel shut-off section 6 is in a shut-off state, indicating a power generation halt condition caused by the abnormal temperature rise. The fuel shut-off section 6 uses the movable rod of an actuator as a valve rod as described later.

The fuel shut-off section 6 has a cylindrical valve case 61 and an actuator 62 which is disposed to be fitted into one end of the valve case 61. The actuator 62 has a main body section 621 and a movable rod 622 which is projectable from the main body section 621, and the movable rod 622 is slidably disposed within the valve case 61. The movable rod 622 moves to the left in the drawing when the abnormal temperature rise occurs, and the movement direction (corresponding to "movement direction" in claims) of the movable rod 622 at the time of the abnormal temperature rise is also called as the shut-off direction. It should be noted that the shut-off direction side (the left-hand side in the drawing) is called the front end side, and its opposite side (the right-hand side in the drawing) is called the rear end side in the following description.

The movable rod 622 forms a valve rod and has a columnar shaft section and a large diameter section 622a corresponding to a valve head disposed at an almost intermediate position in its axial direction. And the front end side of the movable rod 622 is formed to have, for example, a semispherical shape. The movable rod 622 is free from a direct contact with the fuel because it is covered with, for example, a sac-like movable film 65 as described latcr but its surface is preferably treated so as to be excellent in corrosion resistance in case of a contact with the fuel resulting from a damage to the moveable film 65. For example, the surface treatment includes a passivation treatment but is not limited to it. The movable rod 622 coated by, for example, noble metal plating of gold or the like or resin coating of a fluorine-based resin or the like is used preferably.

The actuator 62 can cause the movable rod 622 to project. FIG. 2 shows a state (non-projected state) that the movable rod 622 is retracted into the main body section 621. For example, the actuator 62 has therein a non-projected state holding magnet (not shown) and a projected state holding magnet (not shown) and can hold the movable rod 622 in a non-projected state or projected state.

For example, the valve case 61 is composed of a first case section 611 into which a front end-side shaft section of the movable rod 622 is inserted, and a second case section 612 in which a rear end side of the movable rod 622 is disposed. The first case section 611 has a shaft hole 611a into which the front end-side shaft section of the movable rod 622 is inserted. An inlet opening 611b, into which the fuel is injected from the fuel storing section 4, is formed on the side surface of the shaft hole 611a. And an output opening 611c, which is extended in the axis direction for discharging the fuel, is formed at the axially end side of the shaft hole 611a. In other words, the inlet opening 611b and the output opening 611c are connected through the shaft hole 611a to form a continuous flow path.

The inside diameter of the shaft hole 611a is larger than the shaft diameter (including the thickness of the sac-like movable film 65) of the movable rod 622 covered by the sac-like movable film 65, such that the fuel can pass through between the inside wall of the shaft hole 611a and the outside wall of the sac-like movable film 65. The front end-side inside wall portion of the shaft hole 611a is formed to have a diameter which becomes smaller toward the front end side, such that the output opening 611c can be blocked by fitting the semispherical shape portion of the front end side of the movable rod 622 into it.

The second case section 612 has a valve head chamber 612a in which the large diameter section (valve head) 622a of the movable rod 622 is disposed. A spring 63 made of a shape memory alloy as the valve rod moving means is disposed on the rear end side (right-had side in the drawing) of the large diameter section 622a within the valve head chamber 612a. The shape memory alloy spring 63 has its repulsion force increased as the temperature increases and serves to push the movable rod 622 toward the font end side when the abnormal temperature rise occurs.

A bias spring 64 is disposed on a front end side of the large diameter section a wi thin the valve head chamber 612a. This bias spring 64 is not required to be made of a shape memory alloy but may be an ordinary spring. The bias spring 64 is used to assist the suppression of an unnecessary movement of the movable rod 622 toward the front end side at the time of normal power generation (excepting the abnormal temperature rise) and to assist the movement (return) of the movable rod 622 from the shut-off state to the open state when the abnormal temperature rise state is cancelled and the temperature lowers.

The front end side of the movable rod 622 is covered by the sac-like movable film 65. Specifically, the movable film 65 is composed of a sac-like portion 65a which covers the front end side of the movable rod 622 and a ring-shape peripheral portion 65b which is on its rear end side. The movable film 65 is fixed by holding the ring-shape peripheral portion 65b on the rear end side between the first case section 611 and the second case section 612. The movable film 65 is disposed to suppress the fuel front contacting to and corroding the movable rod 622 and seats the first case section 611 to prevent the fuel from leaking to another portion. It is preferable in view of suppressing the fuel from leaking that a lip-shape (mountain-like shape) lip portion 65c is especially disposed on the outer circumference side of the ring-shape peripheral portion 65b.

For example, the movable film 65 is made of EPDM (ethylene-propylene-diene rubber) having methanol resistance. The material of the movable film 65 is not necessarily limited to the EPDM but can use suitably VMQ (silicone rubber), FVMQ (fluorosilicone rubber), FKM (fluororubber), NBR (nitrile rubber) and HNBR (hydrogenated nitrite rubber).

The movable film 65 may be configured by using resin having methanol resistance, such as PEI (polyetherimide), PI (polyimide), PEEK (polyether ether ketone), PPS (polyphenylene sulfide) or the like, for the sac-like portion 65a and the ring-shape peripheral portion 65b, and forming the lip portion 65c on the ring-shape peripheral portion 65b by suitably using the above-listed materials.

The fuel shut-off section 6 is configured so that a suppression force, which suppresses the movement of the movable rod 622, exceeds the repulsion force of the shape memory alloy spring 63 which is a force to move the movable rod 622 in the shut -off direction in the normal power generating condition, and the repulsion force of the shape memory alloy spring 63 conversely exceeds the suppression force which suppresses the movement of the movable rod 622 when the abnormal temperature rise occurs. The suppression force which suppresses the movement of the movable rod 622 is a total of the holding force for holding the movable rod 622 i n the non-projected state by the actuator 62, the repulsion force of the bias spring 64 and the elastic force of the sac-like movable film 65.

Normally, since it is determined as the abnormal temperature rise when a temperature becomes about 100°C, it is configured such that the repulsion force of the shape memory alloy spring 63 exceeds the above suppression force when the temperature becomes about 100°C. The temperature which is judged to be the abnormal temperature rise is not necessarily limited to the above temperature but can be changed appropriately. Specific adjustment of the abnormal rising temperature (temperature to move the movable rod 622 in the shut-off direction) can be performed by, for example, selectively using the shape memory alloy spring 63 having an appropriate repulsion force change (repulsion force change with the temperature rise) while considering the holding force of the movable rod 622 in the actuator 62, the repulsion force of the bias spring 64, and the like.

According to the above fuel shut-off section 6, since the suppression force, which suppresses the movement of the movable rod 622, exceeds the repulsion force of the shape memory alloy spring 63 which moves the movable rod 622 in the shut-off direction at the time of the normal power generation, the output opening 611c is not blocked by the movable rod 622, and the fuel having entered through the inlet opening 611b is discharged from the output opening 611c through the shaft hole 611a.

Meanwhile, when the fuel cell 1 has an abnormal temperature rise, the repulsion force is increased because the shape memory alloy spring 63 as the valve rod moving means expands in the axis direction because of its heat, and moves (projects) the movable rod 6 22 in the shut-off direction as shown in FIG. 3.

Since the output opening 611c is formed at a tip end of the shaft hole 611a, it is blocked by the movement of the movable rod 622 in the shut-off direction. And, normally the once-deformed shape memory alloy spring 63 keeps the contracted state and docs not return to the original state unless any force is applied to it, and since a projected state holding magnet (not shown) within the actuator 62 is also disposed to hold the movable rod 622 in the projected state, the output opening 611c is kept in the state blocked by the movable rod 622. Thus, the flow path in the valve case 61 is kept in the blocked state, and the fuel supply from the fuel storing section 4 to the fuel battery cell 2 is also shut off as a result. Therefore, a further abnormal temperature rise can be suppressed.

When the temperature lowers enough, the fuel shut-off section 6 can be returned from the shut-off state to the open state by retracting the movable rod 622 into the main body section 621 as shows in FIG. 2 by passing electricity to a coil (not shown) disposed within the actuator 62 via the controller CTR connected to the fuel shut-off section 6 in a direction to generate a magnetic pole which repulses a projected state holding magnet (not shown). Since it is configured as described above that at the time of normal power generation, the suppression farce, which is a force to suppress the movement of the movable rod 622, exceeds the repulsion force of the shape memory alloy spring 63 which is a force to move the movable rod 622 in the shut-off direction, the movable rod 622 once retracted into the main body section 621 is not normally projected but held in the non-projected state.

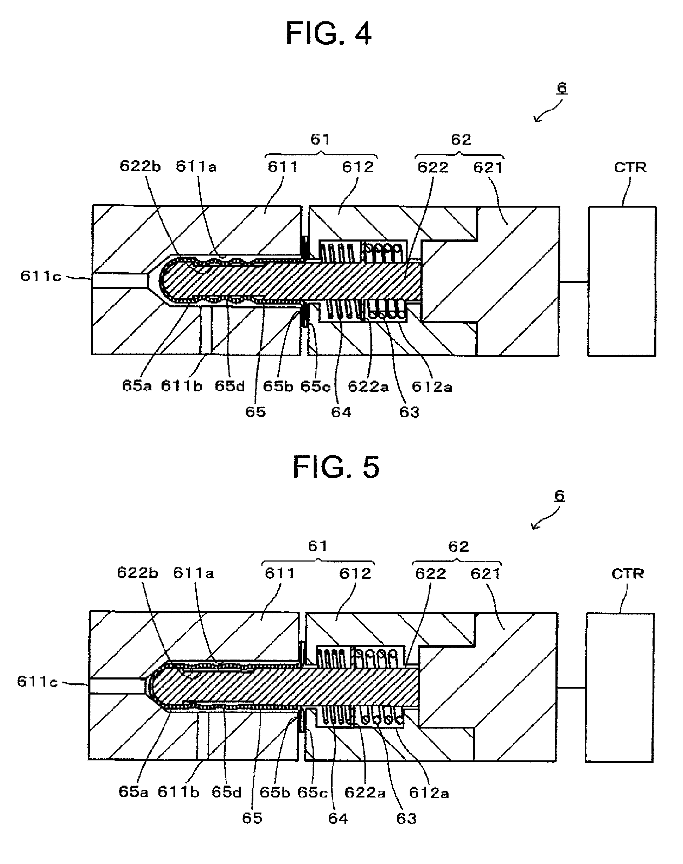

FIGs. 4 and 5 show a modified example of the fuel shut-off section 6 shown in FIGs. 2 and 3. FIG. 4 shows a state that the fuel shut-off section 6 is in an open state, indicating a normal power generation state. And, FIG. 5 shows a state that the fuel shut-off section 6 is in a shut-off state, indicating a power generation halt condition caused by the abnormal temperature rise.

For example, the fuel shut-off section 6 has features that a small diameter section 622b having a diameter smaller than the other section is formed at a front end-side shaft section of the movable rod (valve rod) 622, and the sac-like movable film 65 is provided with a bellows portion 65d at a portion corresponding to that of the small diameter section 622b as shown in FIG. 4. It is configured that when the movable rod 622 is in a non-projected state, the bellows portion 65d is contracted so as to be stored in the small diameter section 622b. And, when the movable rod 622 moves in the shut-off direction to fall in a projected state as shown in FIG. 5, the bellows portion 65d can be expanded in synchronization with the movable rod 622.

Since the bellows portion 65d expands as described above, the movement of the movable rod 622 toward the shut-off direction is not disturbed so much and can change the open state to the shut-off state appropriately, and the abnormal temperature rise can be suppressed properly, When the movable rod 622 is in a non-projected state, the deflected bellows portion 65d is stored in the small diameter section 622b, and the movement of the fuel from the inlet opening 611b to the output opening 611c is not disturbed so much either.

Another example of the fuel shut-off section 6 is described below with the actuator 62 disposed on the side to which the valve rod is moved to shut off and the movable rod 622 disposed opposite to the valve rod.

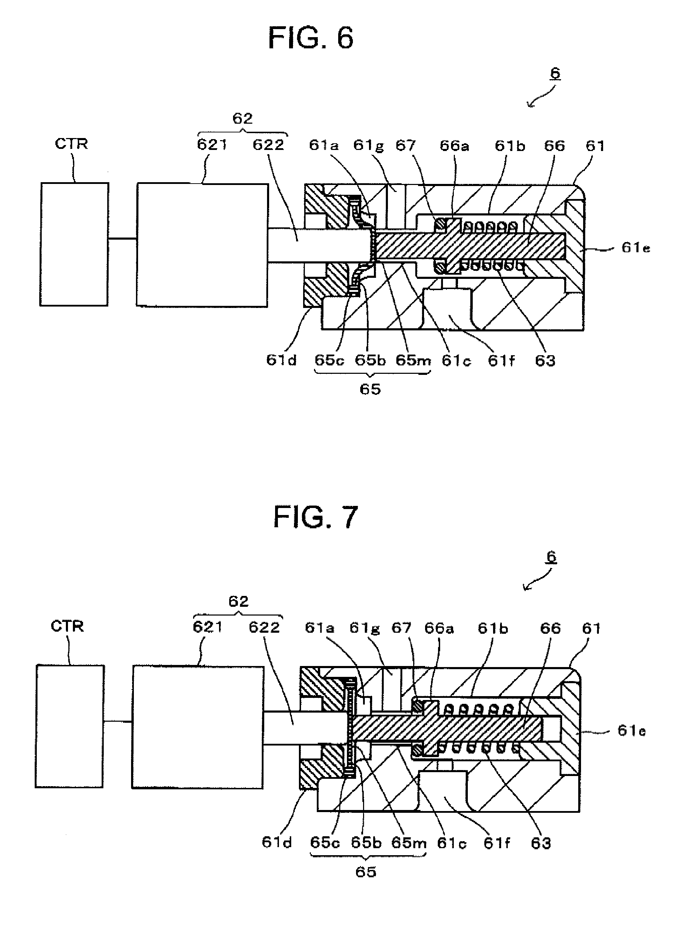

FIGs. 6 and 7 show an example of the fuel shut-off section 6. FIG. 6 shows a state that the fuel shut-off section 6 is in an open state, indicating a normal power generation state. FIG. 7 shows a state that the fuel shut-off section 6 is in a shut-off state, indicating that the power generation halt condition was caused by the abnormal temperature rise.

For example, the fuel shut-off section 6 has a valve rod 66 disposed in the cylindrical valve case 61 and the actuator 62 disposed in the movement direction (the shut-off direction, the left-hand side in the drawing) of the valve rod 66 when an abnormal temperature rise occurs as shown in FIG. 6. The actuator 62 has the main body section 621 and the movable rod 622 which is projectable from the main body section 621, and the movable rod 622 is disposed to face the front end side of the valve rod 66 via a movable film 65 described later.

For example, the actuator 62 has therein a non-projected state holding magnet (not shown) and a protected state holding magnet (not shown) and can hold a non-projected state and a projected state. FIG. 6 shows that the movable rod 622 is in a state projected (projected state) from the main body section 621.

The valve rod 66 has a columnar shaft section and a valve head 66a having a diameter larger than that of another section disposed at an almost intermediate position in the axis direction- The valve rod 66 is preferably excellent in corrosion resistance with its surface treated because it comes into direct contact with the fuel. The surface treatment includes, for example, a passivation treatment but is not limited to it. For example, noble metal plating of gold or the like or resin coating of a fluorine-based resin or the like can be used preferably.

A flow path-separating movable chamber 61a is disposed at the front end side of the valve case 61. A front-end holder 61d is fitted into the front end opening portion of the flow path-separating movable chamber 61a with the movable film 65 between them, and the flow path-separating movable chamber 61a is sealed by the movable film 65. Specifically, the movable film 65 is composed of a center portion 65m and a ring-shape peripheral portion 65b on its outer circumference side, and the ring-shape peripheral portion 65b is fixed by holding it between the inside wall of the flow path-separating movable chamber 61a and the frost-end holder 61d.

The movable film 65 is disposed to suppress the leakage off the fuel from the flow path-separating movable chamber 61a and the corrosion of the movable rod 622 of the actuator 62. From a viewpoint of suppressing the leakage of the fuel, it is particularly preferable to have the lip-shape lip portion 65c on the outer circumference, side of the ring-shape peripheral portion 65b. The movable film 65 can be made of the same material as that of the above-described sac-like movable film 65.

Meanwhile, a valve head chamber 61b in which the valve head 66a is disposed is disposed on the rear end side of the valve case 61, and its rear end opening portion is sealed by fitting a rear-end holder 61e in it. And, the flow path-separating movable chamber 61a and the valve head chamber 61b arc connected through a shaft hole 61c which has a diameter little larger than that of the shaft section of the valve rod 66.

An inlet opening 61f into which the fuel is injected from the fuel storing section 4 is formed at the side surface of the valve head chamber 61b, and an output opening 61g which discharges the fuel is formed at the side surface of the shaft hole 61c. In other words, the inlet opening 61f and the output opening 61g are mutually connected through the valve head camber 61b and the shaft hole 61c to form a continuous flow path.

The valve rod 66 is disposed to range from the flow path-separating movable chamber 61a to the valve head chamber 61b- The front end-side shaft section of the valve rod 66 is inserted into the shaft hole 61c such that it is supported slidably, and the rear end-side shaft section is inserted into the shaft hole formed in the rear-end holder 61e such that it is supported slidably. And, a ring-shape elastic body 67 is disposed on the front end side of the valve head 66a in the valve head chamber 61b, and a spring 63 made of a shape memory alloy as a valve rod moving means is disposed at the rear end side of the valve head 66a. The valve rod 66 is held at a position such that a space is formed between the rear end opening portion of the shaft hole 61c and the ring-shape elastic body 67.

The fuel shut-off section 6 is also configured so that the suppression force, which is a force to suppress the movement of the movable rod 66, exceeds the repulsion force of the shape memory alloy spring 63 which is a force to move the movable rod 66 in the shut -off direction in the normal power gene rating condition, and the repulsion force of the shape memory alloy spring 63 conversely exceeds the suppression force which suppresses its movement when the abnormal temperature rise occurs. The suppression force which suppresses the movement of the valve rod 66 is a holding force which substantially holds the movable rod 622 in the projected state by the actuator 62- More strictly, since the movable film 65 is disposed, the suppression force for suppressing the movement of the valve rod 66 is a difference resulting from the subtraction of an elastic force (tensile force in the shut-off direction) of the movable film 65 from the holding force of the movable rod 622 of the actuator 62.

Normally, since it is also determined as the abnormal temperature rise when a temperature becomes about 100°C for this fuel shut-off section 6, it is configured such that the repulsion force of the shape memory alloy spring 63 exceeds the above suppression farce when the temperature becomes about 100°C. For this fuel shut-off section 6, the temperature which is also judged as the abnormal temperature rise is not necessarily limited to the above temperature but can be changed appropriately. Specific adjustment of the abnormal rising temperature (temperature to move the valve rod 66 in the shut -off direction) can be performed by, for example, selectively using the shape memory alloy spring 63 having an appropriate repulsion force change (repulsion force change with the temperature rise) while considering the holding force of the movable rod 622 in the actuator 62 and the elastic force of the movable film 65.

According to the above fuel shut-off section 6, since the suppression force, which suppresses the movement of the movable rod 66, exceeds the repulsion force of the shape memory alloy spring 63 which moves the valve rod 66 in the shut-off direction at the time of the normal power generation, the rear and opening portion of the shaft hole 61c is not blocked by the ring-shape elastic body 67 or the valve rod 66, and the fuel having entered through the inlet opening 61f is discharged from the output opening 61g through the valve head chamber 61b and the shaft hole 61c.

Meanwhile, when the fuel cell 1 has an abnormal temperature rise, the repulsion force is increased because the shape memory alloy spring 63 as the valve rod moving means expands in the axis direction because of its heat and moves the valve rod 66 in the shut-off direction against the suppression force which suppresses the movement, namely the holding force, of the movable rod 622 in the actuator 62 as shown in FIG. 7.

The rear end opening portion of the shaft hole 61c is blocked by the ring -shape elastic body 67 and the valve head 66a with the movement of the valve rod 66, and the flow path connected from the inlet opening 61f to the output opening 61g is blocked. Thus, the movable rod 622 which was in the projected state changes to a non-projected state, The once-deformed shape memory alloy spring 63 is does not return to the original state unless any force is applied. And, since a non-projected state holding magnet (not shown) which holds the movable rod 622 in the non -projected state is disposed within the actuator 62, the valve rod 66 is held in that position, and the rear end opening portion of the shaft hole 61c is held in the blocked state. Thus, the supply of the fuel to the fuel battery cell 2 is shut off, and a further abnormal temperature rise is suppressed.

When the temperature lowers enough, the fuel shut-off section 6 can be returned from the shut-off state to the open state by projecting the movable rod 622 as shown in FIG. 6 by passing electricity to a coil (not shown) disposed within the actuator 62 via the controller CTR connected to the fuel shut -off section 6 in a direction to generate a magnetic pole which repulses a non-projected state holding magnet (not shown). In other words, it can be returned by moving the movable rod 622 to the projected state to move the valve rod 66 toward the rear end side and opening the rear end opening portion of the shaft hole 61c as shown in FIG. 6. Since it is configured that at the time of normal power generation, the suppression force, which is a force to suppress the movement of the valve rod 66, exceeds the repulsion force of the shape memory alloy spring 63 which is a force to move the valve rod 66 in the shut-off direction as described above, the valve rod 66 which is once put in the open state is held in the open state.

In the above-described fuel shut-off sections 6 shown in FIGs. 2 to 7, the shape memory alloy spring 63 was used as the valve rod moving means, but the valve rod moving means is adequate if it has the above-described repulsion force or deforming force at the time of the abnormal temperature rise, and a bimetal can also be used for it. The bimetal as the valve rod moving means is not particularly restricted if it is deformed with heat at the time of the abnormal temperature rise and can appropriately move the valve rod 66 or the movable rod 622 of the actuator 62 as the valve rod in the shut-off direction by the deforming force. As the fuel shut-off section 6 using the bimetal, for example, the bimetal is disposed instead of the shape memory alloy spring 63 in the fuel shut -off section 6 shown in FIG. 6, and when it deforms in the deforming direction of the bimetal, namely into a protruded shape, the protruded portion is contacted to the rear end side of the valve head 66a.

Although the fuel cell of the invention has been described above, the fuel cell of the invention is not limited to the embodiments described above. It is to be understood that in a practical phase, it can be materialized with the component elements modified without departing from the spirit and scope of the invention. The plural component elements disposed in the above-described embodiments can be combined appropriately to make various inventions. For example, some component elements may be deleted from all the component elements shown in the embodiments. And, the component elements used in difference embodiments may be combined appropriately.

For example, in the fuel shut-off section 6 shown in FIGs. 2 and 3, unnecessary projection of the movable rod 622 at the time of the normal power generation can be suppressed without provision of the bias spring 64, and when the movable rod 622 can be returned easily from the shut-off state to the open state, the bias spring 64 can be omitted.

### Industrial Applicability

The fuel cell according to the aspect of the invention has the fuel shift-off section, which shuts off the fuel supply at the time of the abnormal temperature rise, in the flow path connecting the membrane electrode assembly and the fuel supply section. The fuel cell becomes excellent in reliability and safety by having the fuel shut-off section which shuts off the fuel supply at the time of the abnormal temperature rise. Thus, since the fuel cell according to the aspect of the invention excels in reliability and safety, it can be used effectively as a power source for various devices and equipment.

## Claims

1. A fuel cell, comprising a membrane electrode assembly having a fuel electrode, an air electrode and an electrolyte membrane held between the fuel electrode and the air electrode, a fuel supply section connected to the fuel electrode through a flow path, and a fuel shut-off section disposed in the flow path to shut off the supply of the fuel to the fuel electrode when an abnormal temperature rise occurs,
wherein the fuel shut-off section, has a valve case which has an inlet opening for injecting the fuel from the fuel supply section and an output opening for discharging the fuel to the fuel electrode, a valve rod which is disposed within the valve case, and a valve rod moving means which is formed of a spring made of a shape memory alloy or a bimetal to move the valve rod to shut off a flow path which connects the inlet opening and the output opening when the abnormal temperature rise occurs.

2. The fuel cell according to claim 1,
wherein the fuel shut-off section has an actuator which has a movable rod, and the movable rod also serves as the valve rod.

3. The fuel cell according to claim 2,
wherein the valve case has a shaft hole, which connects the inlet opening and the output opening and into which a movement direction-side shaft section of the valve rod is inserted, and a valve head chamber in which a valve head of the valve rod is disposed, and the valve rod roving means is disposed within the valve head chamber and on the side opposite to the movement direction with respect to the valve head.

4. The fuel cell according to claim 3,
wherein the valve case is mainly composed of a first case section having the shaft hole and a second case section having the valve head chamber and provided with a sac-like movable film, which covers the movement direction-side shaft section of the valve rod, between the first case section and the second case section with its end portion held between the first case section and the second case section.

5. The fuel cell according to claim 4,
wherein the valve rod has a small-diameter portion on the movement direction-side shaft section, and the sac-like movable film has a bellows form portion which covers the small-diameter portion.

6. The fuel cell according to claim 4,
wherein the other end portion of the sac-like movable film has an almost mountain-like shape cross section in a pushing direction.

7. The fuel cell according to claim 1,
wherein the fuel shut-off section has an actuator having a movable rod, the actuator is disposed in the movement direction-side of the valve rod, and the movable rod is disposed to face the valve rod.

8. The fuel cell according to claim 7,
wherein the valve case has a flow path-separating movable chamber which is disposed in the movement direction side and its opening portion scaled with a movable film, a valve beard chamber which is disposed on the side opposite to the movement direction and provided with the inlet opening, and a shaft hole which connects the flow path-separifing movable chamber and the valve head chamber and is provided with the output opening; the valve rod is disposed to range from the flow path-sepaiating movable chamber to the valve head chamber and has a valve head disposed, within the valve head chamber; the valve rod moving means is disposed in the valve head chamber on the side opposite to the movement direction of the valve head; and the movable rod is disposed to face the valve rod via the movable film.

9. The fuel cell according to claim 1,
wherein the valve rod is undergone a surface treatment to suppress corrosion from occurring by contact with the liquid fuel.
